# EUROPEAN PATENT SPECIFICATION

(11) **EP 1 235 394 B1**
(45) Date of publication and mention of the grant of the patent: **16.11.2011**
(21) Application number: 02006637.9
(22) Date of filing: 19.05.2000
(51) Int. Cl.: H04W 28/10

(54) **Prioritization and flow control of a spread spectrum multiuser channel**
Priorisierung und Flusssteuerung von Datenpaketen für einen Spreizspektrummehrbenutzerkanal
Etablissement des priorités et régulation de flux dans un canal multi-utilisateurs à spectre étalé

(30) Priority: 20.05.1999 US 135073 P
(43) Date of publication of application: 28.08.2002
(62) Divisional of application: 00930830.5
(73) Proprietor: INTERDIGITAL TECHNOLOGY CORPORATION, Wilmington, Delaware 19801 (US)
(72) Inventor: Terry, Stephen E., North Point, NY 11768 (US)
(74) Representative: Badel, Xavier Claude Yves

(56) References cited:
- US-A- 5 317 562
- US-A- 5 802 310
- YANG C -Q ET AL: "A TAXONOMY FOR CONGESTION CONTROL ALGORITHMS IN PACKET SWITCHING NETWORKS" IEEE NETWORK,IEEE INC. NEW YORK,US, vol. 9, no. 4, 1 July 1995 (1995-07-01), pages 34-45, XP000526590 ISSN: 0890-8044

## Description

### BACKGROUND

The invention generally relates to channels used by multiple users in a wireless code division multiple access spread spectrum system. More specifically, the invention relates to a system and method of prioritizing and controlling the flow of data for common and shared channels in a spread spectrum system.

As an example of prioritizing, document WO96/08935 discloses a method of transmitting control messages in time slots within fixed length time frames in which control messages are assigned priorities dependent on message type. The messages are allocated to time slots dependent on the assigned priorities.

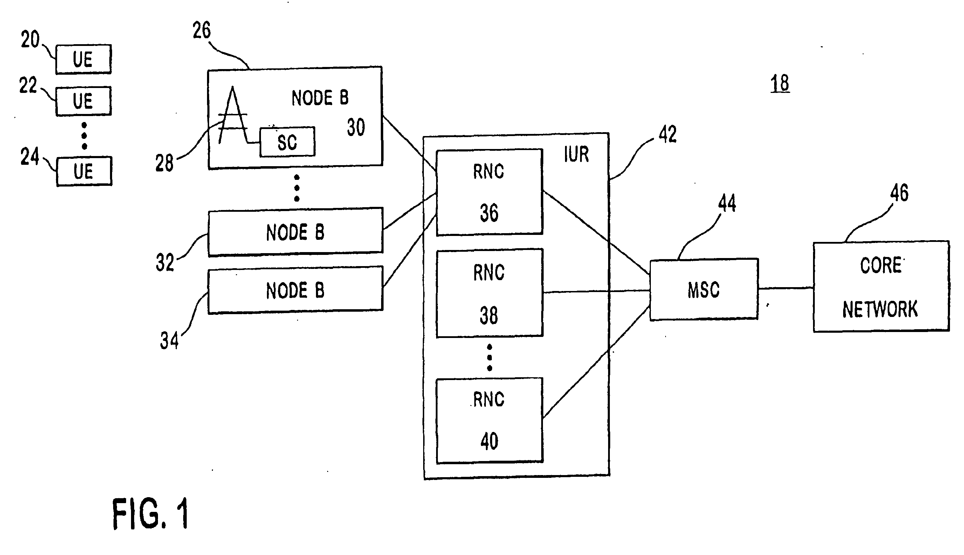

**Figure 1** illustrates a simplified wireless spread spectrum code division multiple access (CDMA) communication system **18.** A node b **26** within the system **18** communicates with associated user equipment **20-24** (UE). The node b **26** has a single site controller (SC) **30** associated with either a single (shown in **Figure 1**) or multiple base stations **28.** A Group of node bs **26, 32, 34** is connected to a radio network controller (RNC) **36**. To transfer communications between RNCs **36-40,** an interface between the RNCs (IUR) **42** is utilized. Each RNC **36-40** is connected to a mobile switching center (MSC) **44** which in turn is connected to the core network **46.**

To communicate within the system **18,** many types of communication channels are used, such as dedicated, shared and common. Dedicated channels transfer data between a node b **26** and a particular UE **20-24.** Common and shared channels are used by multiple UEs **20-24** or users. All of these channels carry a variety of data including traffic, control and signaling data.

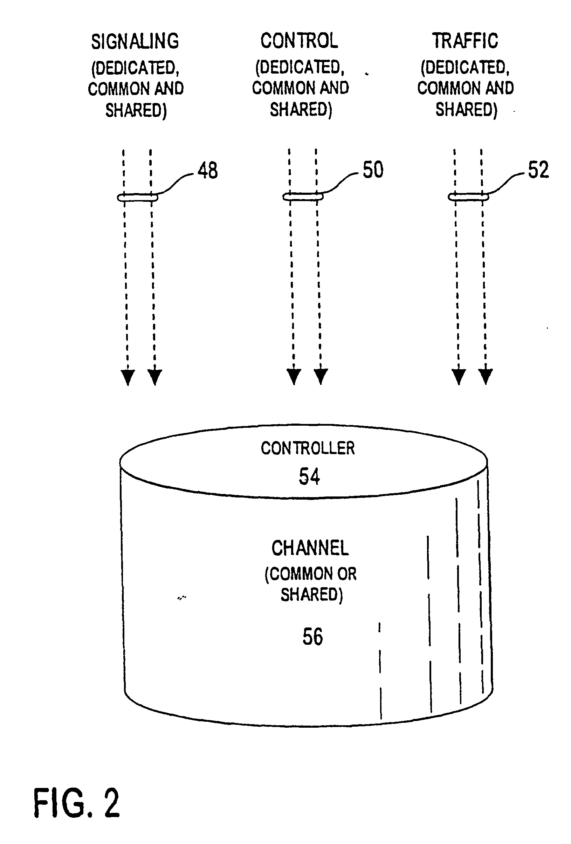

Since shared and common channels carry data for different users, data is sent using protocol data units (PDUs) or packets. As shown in **Figure 2****,** to regulate the flow of data from differing sources **48-52** into a channel **56,** a controller **54** is used.

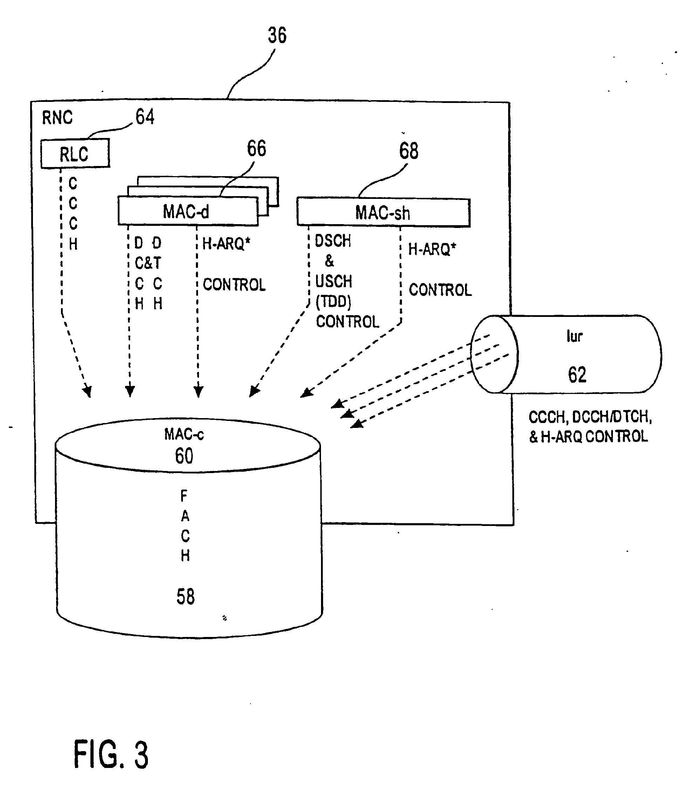

One common channel used for transmitting data to the UEs **20-24** is the forward access common channel (FACH) **58**. As shown in **Figure 3****,** the FACH **58** originates in a RNC **36** and is sent to a node b **28-34** for wireless transmission as a spread spectrum signal to the UEs **20-24.** The FACH 58 carriers several data types from various sources, such as a common control channel (CCCH), dedicated control and traffic channel (DCCH and DTCH), and a downlink and uplink share channel (DSCH and USCH) control signaling. The FACH **58** also carries control signaling out of band, such as hybrid automatic repeat request (H-ARQ), and similar data transmitted via the IUR **62** from other RNCs **38-40,** such as CCCH, DCCH, DTCH and H-ARQ control data.

Various controllers are used by the RNC **36** to control the flow of data. A radio link controller (RLC) **64** handles the CCCH. The dedicated medium access controller (MAC-d) **66** handles the DCCH, the DTCH and some out of band H-ARQ signaling. The shared medium access controller (MAC-sh) **68** handles the DSCH, USCH control signaling and out of band H-ARQ control signaling. Controlling the FACH **58** is the common medium access controller (MAC-c) **60**.

Due to the multiple sources of data **48-52** that can be transmitted over a common or shared channel, the channel controllers **54** queue the data prior to transmission. If a large backlog develops in the queue, data in the queue develops a latency. A large latency of certain data such as control data will result in the failure of a channel. To alleviate this problem, the prior art either flushed the queue to reduce congestion or rerouted the data. Flushing the queue results in the loss of data and requires retransmission which is undesirable. Rerouting data already queued creates a duplication of data within the system and does not resolve the existing congestion. According, it is desirable to reduce the latency of data for shared and common channels without the problems associated with the prior art.

### SUMMARY

The invention provides a scheduling device as claimed in claim 1.

Packet data from a plurality of sources is received at a controller associated with the multiuser channel. Each packet of the packet data is prioritized based on in part the reroutability of a class of data types. Each packet is scheduled for transmission over the multiuser channel based on in part the prioritization. A backlog of packet data queued is tracked for transfer over the multiuser channel. Based on in part the tracked queue, the flow of data from each data source is limited.

### BRIEF DESCRIPTION OF THE DRAWINGS

**Figure 1** is a simplified illustration of a wireless spread spectrum communication system.
**Figure 2** is an illustration of data flowing into a common or shared channel.
**Figure 3** is an illustration of data flowing into a FACH channel within a RNC.
**Figure 4** is an illustration of a prioritization scheme.
**Figure 5** is a prioritization scheme for use with a FACH channel.
**Figure 6** depicts a reservation mechanism used with a common or shared channel.
**Figure 7** depicts data source windows used with a common or shared channel.

### DETAILED DESCRIPTION OF THE PREFERRED EMBODIMENTS

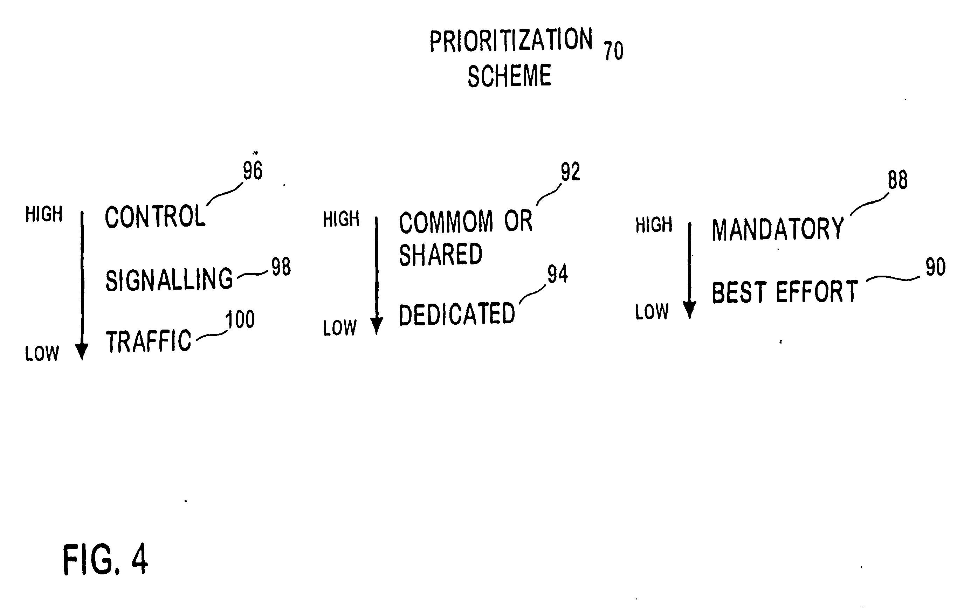

Data prioritization **70** is used to reduce data latency in a multiuser channel controller **54** as illustrated in **Figure 4****.** For a particular common or shared channel, certain data must be transmitted on that channel and is shown in the figure as "mandatory" **88.** Other data is preferably sent on the particular channel but may be rerouted to another channel, such as a dedicated channel. This data is referred to as "best effort" **90.** Since "mandatory" data **88** is not reroutable, it takes priority over "best effort" data **90.**

The type of the data within a packet, such as control **96,** signaling **98** and traffic data **100,** is also used for prioritization. To accomplish prioritization of the data type, control **96** and signaling **98** data packets are separated from traffic data packets **100.** One approach to separating the packets is to group similar data type packets together prior to reception at the controller **54.** Alternately, packets sent by each channel prior to reception by the controller **54** are provided with a flag or identifier indicating the packets' data type.

Since a prolonged delay in the transfer of control **96** or signaling **98** data results in a frozen channel, control **96** and signaling **98** data are given a higher priority than traffic data **100.** Additionally, data associated with multiple users, common or shared **92,** has a higher priority than data for a single user, dedicated **94.** The data prioritization scheme is typically stored in the software of the multiuser channel's controller.

During periods of high congestion, data is rerouted to other channels based on its priority **70.** For instance, best effort dedicated traffic data is rerouted and mandatory common control data is not. By rerouting data prior to queuing, retransmissions will not be required. Accordingly, the amount of queued data is reduced resulting in lower data latency. Additionally, since the rerouted data is never queued, the duplication of data as experienced in the prior art is eliminated.

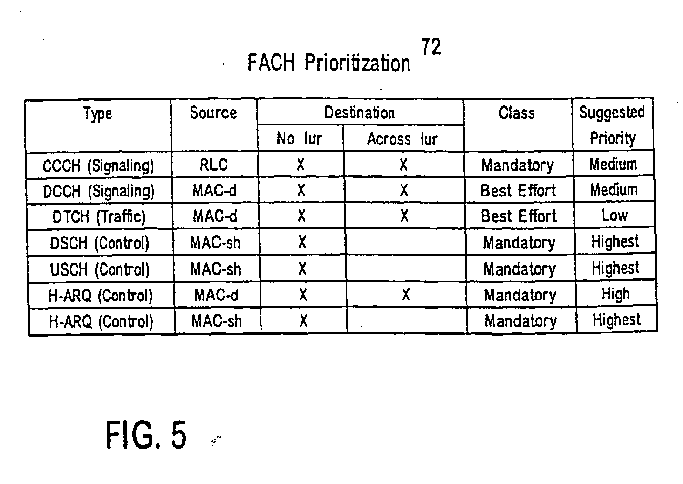

A prioritization scheme **72** for use with a FACH **58** is shown in **Figure 5**. Since the DSCH, H-ARQ of the MAC-sh have mandatory shared control data, they have the highest priority, highest. Although the H-ARQ of the MAC-d has mandatory control data, being dedicated it is assigned a slightly lower priority, high. The CCCH and DCCH are used for signaling and have the next level of priority, medium. The lowest level of priority is assigned to the DTCH because it has best effort dedicated traffic data.

To facilitate this prioritization scheme **72** for the FACH **58,** modifications to the RNC **36** are required. As shown in **Figure 3****,** the prior art MAC-d **66** controls the DCCH, DTCH and MAC-d's H-ARQ. As shown in **Figure 5****,** each of these sources has a different priority. Since this data is multiplexed prior to prioritization at the MAC-d **66,** the multiplexer of the MAC-d **66** is moved to the MAC-c **60** to allow prioritization at the MAC-c **60.** Alternatively, the MAC-d **66** may send the priority and class (mandatory or best effort), such as by a flag or identifier, of each packet of the multiplexed data for prioritization at the MAC-c **60.** The data controlled by the RLC **64** and the MAC-sh **68** have equal priority and accordingly, neither requires modification. Using the stored priority list, the data from the various sources is scheduled for transmission and rerouted during periods of high congestion.

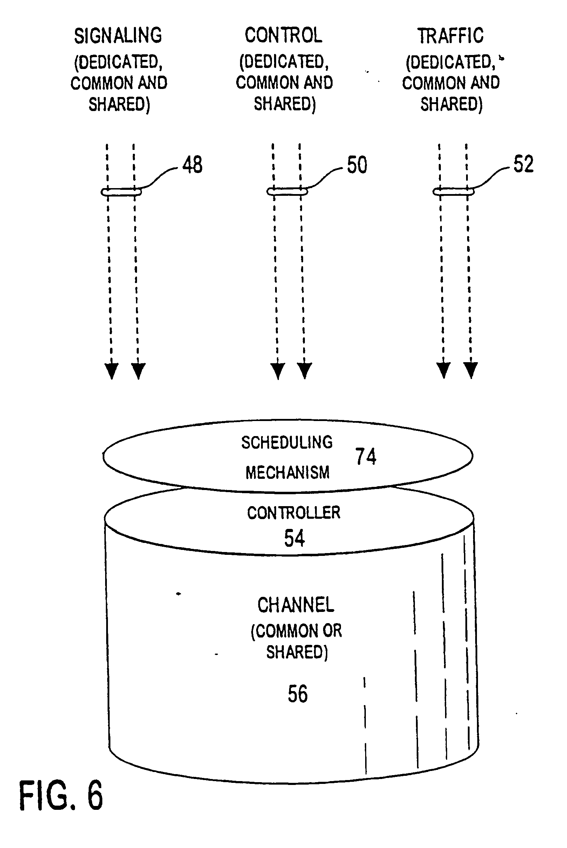

Another technique for reducing the latency of data which may be combined with prioritization is to control the flow of data between the various controllers. As shown in **Figure 6****,** a scheduling mechanism **74** is used to regulate the data entering the common or shared channel **56.** The scheduling mechanism **74** tracks the backlog of data in the controller's queue. If the mechanism **74** recognizes congestion and that the data will not be transmitted in a certain period of time, access to the channel **56** limits the flow of data from the individual data sources. The individual sources will recognize the need to reroute data or to not attempt transmission. Using a flow control mechanism with a FACH, MAC and RLC (Layer 2), the latency of signaling is decreased thus increasing efficiency.

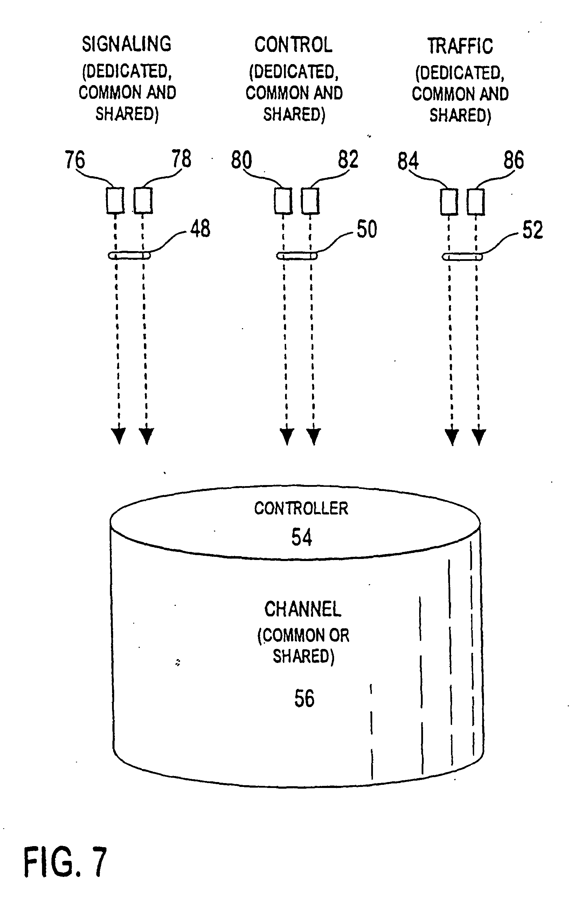

To prevent the monopolization of the common or shared channel **56** by one data source **48-52** variable windows **76-86** may be used as shown in **Figure 7****.** Each data source **48-52** has a window or multiple windows **76-86** of outstanding data in the queue that it is permitted. The size of the window **76** is based on the requirements of the specific source. The window **76** is dynamically adjusted in response to the availability of the queue. As the availability of the channel increases, the size of the windows increases which increases the number of outstanding packets. Conversely, as the availability decreases, the size of the windows decreases which decreases the number of outstanding packets. As a result of the decreased windows, the data sources either reroute or stop sending packets to the windows.

## Claims

1. A scheduling device (74) for controlling packet data from multiple types of data sources (48-52), including data sources (48-52) having reroutable data and data sources (48-52) having non-reroutable data, said packet data flowing into a multiuser channel (56) in a wireless spread spectrum code division multiple access communication system via said device, the device (74) **characterized by**:
a queue (54) associated with the multiuser channel (56) having an input configured to receive incoming packet data from a plurality of data source queues (48-52), the queue (54) outputting the received packet data for transmission over the multiuser channel (56);
the plurality of data source queues (76-86), each data source queue (76-86) uniquely associated with each data source (48-52) and having an input configured to receive data from that queue's data source (48-52), each data source queue (48-52) capable of varying its capacity: and
wherein the varying capacity of each data source queue (48-52).
decreases as the multiuser channel availability increases and increases as the multiuser channel availability decreases.

## Patentansprüche

1. Planungsvorrichtung (74) zur Steuerung von Datenpaketen aus mehreren Typen von Datenquellen (48-52), einschließlich Datenquellen (48-52) mit umleitbaren Daten und Datenquellen (48-52) mit nicht umleitbaren Daten, wobei die besagten Datenpakete über die besagte Vorrichtung in einen Mehrbenutzerkanal (56) in einem drahtlosen Spreizspektrum-CDMA-Übertragungssystem (CDMA = Codeteilungs-Mehrfachzugriff) fließen, wobei die Vorrichtung (74) **gekennzeichnet ist durch**
eine Warteschlange (54), die mit dem Mehrbenutzerkanal verbunden ist, welcher Kanal einen Eingang aufweist, der konfiguriert ist, eingehende Datenpakete von einer Mehrzahl von Datenquelle-Warteschlangen (48-52) zu empfangen, wobei die Warteschlange (54) die empfangenen Datenpakete zur Übertragung über den Mehrbenutzerkanal (56) ausgibt;
die Mehrzahl von Datenquelle-Warteschlangen (76-86), wobei jede Datenquelle-Warteschlange (76-86) eindeutig mit jeder Datenquelle (48-52) verbunden ist und einen Eingang aufweist, der konfiguriert ist, Daten von der Datenquelle (48-52) dieser Warteschlange zu empfangen, wobei jede Datenquelle-Warteschlange (48-52) fähig ist, ihre Kapazität zu ändern; und
wobei die veränderliche Kapazität jeder Datenquelle-Warteschlange (48-52) mit zunehmender Verfügbarkeit des Mehrbenutzerkanals abnimmt und mit abnehmender Verfügbarkeit des Mehrbenutzerkanals zunimmt.

## Revendications

1. Dispositif d'ordonnancement (74) pour réguler des données par paquets de multiples types de sources de données (48-52), comprenant des sources de données (48-52) ayant des données pouvant être réacheminées et des sources de données (48-52) ayant des données ne pouvant pas être réacheminées, lesdites données par paquets s'écoulant dans un canal multi-utilisateurs (56) dans un système de communication à accès multiples par répartition de code à spectre étalé sans fil par le biais dudit dispositif, le dispositif (74) étant **caractérisé par** :
une file d'attente (54) associée au canal multi-utilisateurs (56) ayant une entrée configurée pour recevoir des données par paquets entrantes d'une pluralité de files d'attente de sources de données (48-52), la file d'attente (54) délivrant les données par paquets reçues pour leur transmission sur le canal multi-utilisateurs (56) ;
la pluralité de files d'attente de sources de données (76-86), chaque file d'attente de sources de données (76-86) étant associée de manière unique à chaque source de données (48-52) et ayant une entrée configurée pour recevoir des données d'une source de données (48-52) de cette file d'attente, chaque file d'attente de sources de données (48-52) étant capable de faire varier sa capacité ; et
dans lequel la capacité variable de chaque file d'attente de source de données (48-52) diminue au fur et à mesure que la disponibilité de canal multi-utilisateurs augmente et elle augmente au fur et à mesure que la disponibilité de canal multi-utilisateurs diminue.
